# EUROPEAN PATENT APPLICATION

(11) **EP 2 292 485 A2**
(43) Date of publication of application: **09.03.2011**
(21) Application number: 10009029.9
(22) Date of filing: 31.08.2010
(51) Int. Cl.: B60T 17/06, B60T 13/14

(54) **Power braking system**

(30) Priority: 03.09.2009 GB 0915310
(71) Applicant: AGCO GmbH, 87616 Marktoberdorf (DE)
(72) Inventor: Brenninger, Martin, 87616 Marktoberdorf (DE); Brugger, Klaus, 87616 Marktoberdorf (DE); Kreil, Oliver, 87662 Kaltental (DE); Zeiler, Hans-Peter, 87616 Marktoberdorf (DE)
(74) Representative: Smith, Louise Marie

(57) **Abstract**

A hydraulic power braking circuit for a vehicle has a reservoir (23) for hydraulic fluid and a pump (14) which draws hydraulic fluid from the reservoir for charging a hydraulic pressure vessel (13) with pressurised fluid. A driver operated pilot valve (11) is provided for directing pressurised fluid from the pressure vessel (13) to open a relay valve (15) which connects the pressurised fluid to brake actuators to apply associated brakes (18). The pilot valve (11) and relay valve (15) both having return lines (21, 22) to dump fluid to the reservoir (23) when not operating the relay valve or brake actuators respectively. Both return lines (21, 22) have U-shaped end configurations (25, 24) within the reservoir (23) which ensure that the ends of these return lines retain fluid therein no matter what inclination of the reservoir occurs during use of the vehicle to avoid the entry of air into the circuit. This arrangement allows the reservoir to be located below the pilot and relay valves without the risk of air entering the system.

## Description

This invention relates to hydraulic power braking systems and in particular to such systems for use in agricultural tractors.

Power braking systems are known in which a pilot valve or valves operated by an adjacent brake pedal or pedals control the movement of a relay valve or valves which in turn control the application of stored pressurised fluid to associated brakes.

Problems can arise with such hydraulic power braking systems due to fluid draining from the system between the pilot and relay valves and this can cause delay in braking and make the braking power applied hard to control.

Thus according to the present invention there is provided a hydraulic power braking circuit for a vehicle having, a reservoir fur hydraulic fluid, a pump which draws hydraulic fluid from the reservoir for charging a hydraulic pressure vessel with pressurised fluid, a driver operated pilot valve for directing pressurised fluid from the pressure vessel to open a relay valve which connects the pressurised fluid to brake actuators to apply associated brakes, the pilot valve and relay valve both having return lines to dump fluid to the reservoir when not operating the relay valve or brake actuators respectively, both return lines having end configurations within the reservoir which ensure that the ends of these return lines retain fluid therein no matter what inclination of the reservoir occurs during use of the vehicle to avoid the entry of air into the circuit.

The ends of the return lines are arranged to remain at all times below the level of fluid in the reservoir to prevent the entry of air into the circuit.

The ends of the return lines preferably include U-bend portions to trap fluid therein and thus avoid the entry of air into the circuit even at high inclinations of the reservoir.

Such an arrangement allows the reservoir to be located below at least one of the pilot valve and relay valve.

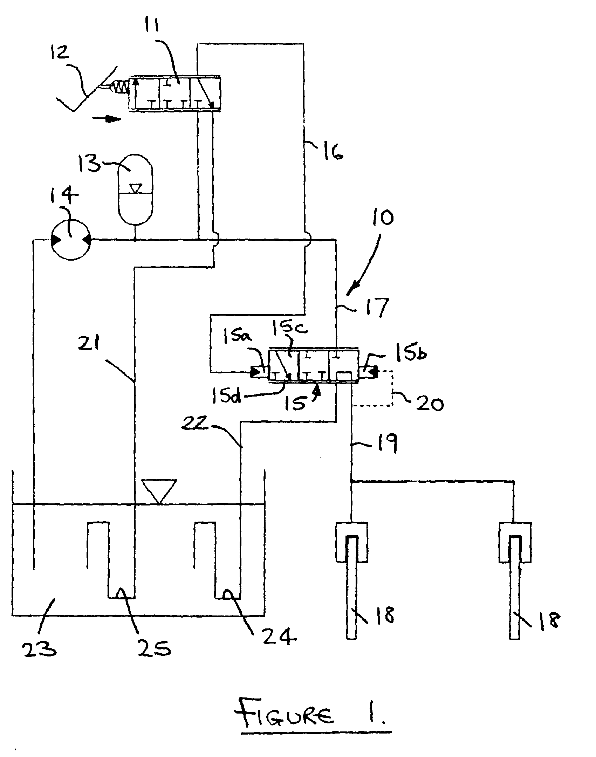

One embodiment of the present invention will now be described, by way of example only, with reference to the accompanying Figure 1 which diagrammatically shows a power braking system in accordance with the present invention.

Referring to Figure 1, the power braking system 10 has a pilot valve 11 operated by an adjacent brake pedal 12. Pilot valve 11 is supplied with pressurised fluid from an accumulator 13 which is charged by a pump 14.

Pilot valve 11 supplies the fluid to a first pilot drilling 15a at one end of a relay valve 15 via line 16. Relay valve 15 also receives pressurised fluid from accumulator 13 via line 17 and, when valve 15 is an open condition supplies this pressurised fluid to brakes 18 via line 19. The pressure in line 19 is fed back to a second pilot drilling 15b at the other end of relay valve 15 by a feed back drilling 20.

Thus in order to operate the brakes 18 the pedal 12 is depressed which opens pilot valve 11 which in turn pressurises the first pilot drilling 15a of relay valve 15 with a pressure proportional to the movement of pedal 13. This in turn displaces the spool of valve to open the valve and thus supply a pressure to line 19 from accumulator 13 which is again proportional to the movement of pedal 12.

In accordance with the present invention both the pilot valve 11 and the relay valve 15 are provided with return lines 21 and 22 which return unwanted fluid to a reservoir 23 from which pump 14 itself draws fluid.

To avoid the risk of fluid draining from line 16 when relay valve 15 is in the closed position by leaking between the valve slide 15c and its associated bore 15d into the drain line 22, the drain line 22 is provided with a U-shaped bend 24 which tends to trap fluid in the drain line 22 no matter what the inclination of the reservoir 23. This is particularly important in an agricultural tractor which may be required to operate in various inclined positions. This U-bend 24 stops air being drawn in to the system via drain line 22 as well as restricting the drainage from the system referred to above.

Similarly the drain line 21 from the pilot valve 11 is also provided with a U-bend section 25 which again prevents the entry of air into the system and the drainage of fluid from the system.

By using the provision of U-bend 24 the drainage of the line 16 between the pilot valve I I and relay valve 15 can be controlled and thus the quick brake response retained no matter what the inclination of the tractor. This greatly assists in controlling the brake power which is applied when pedal 12 is depressed.

The above arrangement enables the reservoir 23 to be positioned below both the pilot valve I and the relay valve 15 which is a preferred arrangement in most agricultural tractor.

## Claims

1. A hydraulic power braking circuit (10) for a vehicle having a reservoir (23) for hydraulic fluid, a pump (14) which draws hydraulic fluid from the reservoir for charging a hydraulic pressure vessel (13) with pressurised fluid, a driver operated pilot valve (11) for directing pressurised fluid from the pressure vessel to open a relay valve (15) which connects the pressurised fluid to brake actuators to apply associated brakes (18), circuit being **characterised in that** the pilot valve (11) and relay valve (15) both having return lines (21,22) to dump fluid to the reservoir (23) when not operating the relay valve or brake actuators respectively, both return lines having end configurations (24,25) within the reservoir (23) which ensure that the ends of these return lines retain fluid therein no matter what inclination of the reservoir occurs during use of the vehicle to avoid the entry of air into the circuit.

2. A circuit according to claim 1 **characterised in that** the ends (24,25) of the return lines (21,22) are arranged at all times to remain below the level of fluid in the reservoir to avoid the entry of air into the circuit.

3. A circuit according to claim 1 or 2 **characterised in that** the ends of the return lines (21,22) both include U-bend portions (24,25) to trap fluid therein and thus avoid the entry of air into the circuit.

4. A circuit according to any one of claims I to 3 in which the reservoir (23) is located below at least one of the pilot valve (11) and relay valve (15).
